# EUROPÄISCHE PATENTSCHRIFT

(11) **EP 0 737 699 B1**
(45) Veröffentlichungstag und Bekanntmachung des Hinweises auf die Patenterteilung: **20.06.2001**
(21) Anmeldenummer: 96105344.4
(22) Anmeldetag: 03.04.1996
(51) Int. Cl.: C08G 18/20, C09J 175/04

(54) **Verfahren zur Beeinflussung der Vernetzung von feuchtigkeitsvernetzenden Kleb- oder Dichtstoffen**
Process for influencing the crosslinking of humidity-curing adhesives and sealants
Procédé pour influencer le durcissement d'adhésifs et matières d'étanchéité durcissables par l'humidité

(30) Priorität: 12.04.1995 DE 19513944
(43) Veröffentlichungstag der Anmeldung: 16.10.1996
(73) Patentinhaber: Kömmerling Chemische Fabrik GmbH & Co., 66954 Pirmasens (DE)
(72) Erfinder: Themm, Jürgen, 66987 Thaleischweiler (DE); Holub, Klaus, 66989 Höhfröschen (DE)
(74) Vertreter: Wieske, Thilo

(56) Entgegenhaltungen:
- EP-A- 0 080 668
- WO-A-92/13016
- DE-A- 3 843 221
- DE-A- 4 229 953
- GB-A- 2 073 215

## Beschreibung

Die Erfindung betrifft ein Verfahren zur Beschleunigung der Vernetzung von feuchtigkeitsvernetzenden Kleb- oder Dichtstoffen, insbesondere zur Beschleunigung der Vernetzung bei Temperaturen um und unterhalb des Gefrierpunktes von Wasser, insbesondere unter 8 °C.

Als feuchtigkeitsvernetzende Kleb- oder Dichtstoffe werden üblicherweise solche Kleb- oder Dichtstoffe bezeichnet, die unter dem Einfluß von Feuchtigkeit in der umgebenden Atmosphäre vernetzen bzw. polymerisieren. Typische Beispiele hierfür wären Cyanoacrylate, Silikonkautschuke, Polyurethane, sowie MS-Polymere.

Beispielsweise setzen sich Polyurethan-Kleb- oder Dichtstoffe bekanntermaßen aus einer Isocyanat- sowie einer Diol- und/oder Diaminkomponente zusammen. Die Polyurethanstruktur entsteht dann durch die Polymerisation dieser beiden Komponenten, was auch als Vernetzen bezeichnet wird.

Die Vernetzung des Polyurethan-Kleb- oder Dichtstoffes kann mittels verschiedener Katalysatoren beschleunigt werden, wobei als Katalysatoren im allgemeinen Amine oder organische Zinnverbindungen (vgl. Römpp's Chemielexikon, 9. Aufl., Stuttgart) eingesetzt werden.

Polyurethan-Klebstoffe werden heutzutage in Form von kalt- oder warmhärtenden 1- und 2- Komponentenklebstoffen eingesetzt. Erfolgt das Aushärten dabei aufgrund des Kontaktes mit Feuchtigkeit (nämlich Wasser) in der umgebenden Atmosphäre, werden die Polyurethane in die Klasse der feuchtigkeitsvernetzenden Klebstoffe eingereiht. Je nach Wahl der Isocyanat- oder der Diol-/Diaminkomponente können verschiedenste mechanische und/oder thermische Eigenschaften des Klebstoffes erzielt werden, weshalb sie weit verbreitet zum Kleben von Metall, Keramik, Kunststoffen und anderen Materialien eingesetzt werden.

Typische Anwendungsgebiete sind das Kleben von Kernverbundelementen z.B. im Fahrzeug-, Boots- oder Containerbau, insbesondere beim Kleben von LKW-Aufbauten, Kühlboxen, dem PKW-, Lüftung- und Fertighausbau.

Üblicherweise wird die Polymerisation, d.h. Vernetzung der Polyurethan-Kleb- oder Dichtstoffe nicht schon vom Hersteller des Polyurethans ausgeführt, sondern erfolgt erst am Einsatzort durch den Verwender. Entsprechende Polyurethan-Klebstoffe sind im Handel erhältlich. Diese stellen 1 und 2-Komponentenklebstoffe dar. Vor der Verwendung werden die Klebstoffe häufig zum Erhalt der benötigten Konsistenz sowie zum Starten der Vernetzung verdünnt, wie dies aus der DE 31 45 991 A1 und der EP 0 080 668 A1 bekannt ist. Zur Anwendung wird der Klebstoff auf ein erstes zu klebendes Bauteil aufgetragen, ein zweites Bauteil angedrückt und das Vernetzen des Klebstoffes abgewartet.

Für das Kleben von LKW-Aufbauten ist ein entsprechendes Verfahren aus der DE 42 02 391 A1 bekannt. Diese offenbart ein Verfahren zum Kleben eines gebogenen Verbundelementes mit U-förmigem Querschnitt und je einer Längsnut an beiden Innenseiten mit einer Platte, bei dem man eine Klebstoffraupe in der Längsnut so aufbringt, daß diese etwas aus der Rinne/Nut hervorsteht, das Verbundelement auf die Platte aufsteckt bzw. andersherum die Platte in das Verbundelement einführt und anschließend den Klebstoff aushärten läßt.

Weiterhin ist aus der GB-A-2 073 215 eine Klebstoffzusammensetzung bekannt, die ein Präpolymer aus Polydiethylenglycoladipat und TDI, Polyisocyanat und Trichlorethylphosphat umfaßt und der vor der Verwendung eine Mischung aus Wasser, Harnstoff und Natriumsulforhicinat zugesetzt wird. Das Verkleben erfolgt bei Temperaturen von 20 °C, 0 °C und -4 °C, wobei der Zusatz zu einer Verbesserung der Schereigenschaften der Klebebindung führt.

Ein Nachteil aller feuchtigkeitsvernetzenden Kleb- oder Dichtstoffe besteht darin, daß sie zur Vernetzung auf Feuchtigkeit in der Umgebung, der umgebenden Atmosphäre angewiesen sind. Da die Vernetzungsgeschwindigkeit sowohl von der Feuchtigkeit als auch von der Reaktionstemperatur abhängt, ist die Verwendung derartiger Kleb- oder Dichtstoffe bekanntermaßen unter trockenen und/oder kalten Bedingungen problematisch. Bei Temperaturen unter dem Gefrierpunkt ist die absolute Luftfeuchtigkeit beispielsweise so gering, daß sie für die Vernetzung nicht mehr ausreichend ist. Darüber hinaus gefriert der Reaktionspartner Wasser und steht damit für die Reaktion nicht mehr zur Verfügung. Beide Faktoren führen letztlich zu einer so drastisch verlangsamten Polymerisation, daß innerhalb eines zeitlich akzeptablen Rahmens kein Kleben mehr erfolgt. Es kann sogar zum vollständigen Reak-tionsstillstand kommen.

Da gerade beim Bau von großvolumigen Teilen, insbesondere Nutzfahrzeugen, im Boots- oder Containerbau, oft im Freien gearbeitet wird bzw. die Teile unmittelbar nach dem Zusammensetzen aus Platzgründen aus der Produktionsanlage auf Parkplätze im Freien ausgelagert werden müssen, ist das Kleben aufgrund der extrem verlangsamten Polymerisation des Kleb- oder Dichtstoffes im Winter problematisch.

Zwar ließen sich obige Probleme auch mit Hilfe der Auswahl anderer Monomerkomponenten überwinden, dieses würde aber bedeuten, daß ein Hersteller sehr viele spezielle 1-Komponentenklebstoffe bereithalten muß und daß überdies dem Verwender der Einsatz verschiedener Kleb- oder Dichtstoffe in Abhängigkeit von der Jahreszeit zugemutet würde. Beides führt im Hinblick auf Vorratshaltung und/oder Umstellung der Produktion unmittelbar zu einem Anstieg der Produktionskosten.

Außerdem zeichnen sich die bisher verwendeten 1-Komponentenklebstoffe bzw. entsprechenden Dichtstoffe durch eine hohe Lagerstabilität und damit durch eine optimale Produktionsleistung aus. Wieweit sich diese durch Auswahl der geeigneten Monomerkomponenten optimierten Produkteigenschaften bei Austausch der Monomere aufrechterhalten ließen, ist fraglich. Der Zusatz eines Polymerisationsbeschleunigers, ein möglicher Ansatz zur Beschleunigung einer Vernetzung bei tiefen Temperaturen, führt z.B. zu einer verringerten Lagerstabilität des entsprechenden Produktes.

Es ist daher Aufgabe der Erfindung, eine Möglichkeit aufzuzeigen, das Vernetzen von feuchtigkeitsvernetzenden Kleb- oder Dichtstoffen wunschgemäß zu beeinflussen. Diese Beeinflussung soll möglichst ohne nachteilige Auswirkungen auf die verwendeten Kleb- oder Dichtstoffe oder deren Klebeigenschaften erfolgen.

Weiterhin ist es eine Aufgabe der Erfindung, die Verwendung von herkömmlichen 1-Komponentenklebstoffen und entsprechenden Dichtstoffen bei Temperaturen um und unterhalb des Gefrierpunktes zu ermöglichen, ohne deren ausgezeichnete Lagerstabilität zu verringern.

Erfindungsgemäß wird im Rahmen eines sonst üblichen Klebvorganges ein Verfahren zur Vernetzung eines feuchtigkeitsvernetzenden Kleb- oder Dichtstoffes durchgeführt, welches bei Temperaturen unterhalb von 8 °C ausgeführt wird, und bei dem dem Klebstoff bzw. Dichtstoff erst bei seiner Verwendung ein Medium zugesetzt wird bzw. ein Medium auf den Kleb- oder Dichtstoff aufgebracht wird, wobei das Medium das Vernetzen des Kleb- oder Dichtstoffes bei diesen Temperaturen beschleunigt, welches dadurch gekennzeichnet ist, daß der feuchtkeitsvernetzende Kleb- und Dichtstoff ein Cyanoacylat, ein Polyurethan, ein Silikonkautschuk oder MS-Polymer ist und daß das Medium ein Amin oder eine organische Metallverbindung, ausgewählt untes Dibutylzinndilaurat, Zinn-II-octoat oder dem Phenyl-Hg-ester, enthält.

Das obige Verfahren gestattet eine Verbreiterung der Einsatzbandbreite von feuchtig-keitsvernetzenden Kleb- oder Dichtstoffen gegenüber dem nach dem Stand der Technik möglichen. Je nach der gewünschten Änderung kann ein Medium eingesetzt werden, welches das Vernetzen des Kleb- oder Dichtstoffes überhaupt ermöglicht, z.B. bei tiefen Temperaturen in extremer Trockenheit, oder dieses beschleunigt, z.B. bei nur knapp über oder unter dem Gefrierpunkt liegenden Temperaturen. Es kann auch ein Medium verwendet werden, welches das Vernetzen sowohl ermöglicht als auch beschleunigt.

Gleichzeitig kann unter Verwendung des erfindungsgemäßen Verfahrens unabhängig von den konkreten Umgebungsbedingungen ein herkömmlicher 1-Komponentenkleb- bzw. Dichtstoff verwendet werden. Da der Klebstoff selbst nicht verändert werden muß, bleiben gleichzeitig alle mit den gängigen feuchtigkeitsvernetzenden Klebstoffen, insbesondere den Polyurethan-Klebstoffen verbundenen Vorzüge, wie hohe Lagerstabilität, abstimmbare mechanische und/oder thermische Eigenschaften etc. erhalten. Andererseits wird ihre Anwendung im Hinblick auf die Randbedingungen Temperatur und Feuchtigkeit erheblich erweitert.

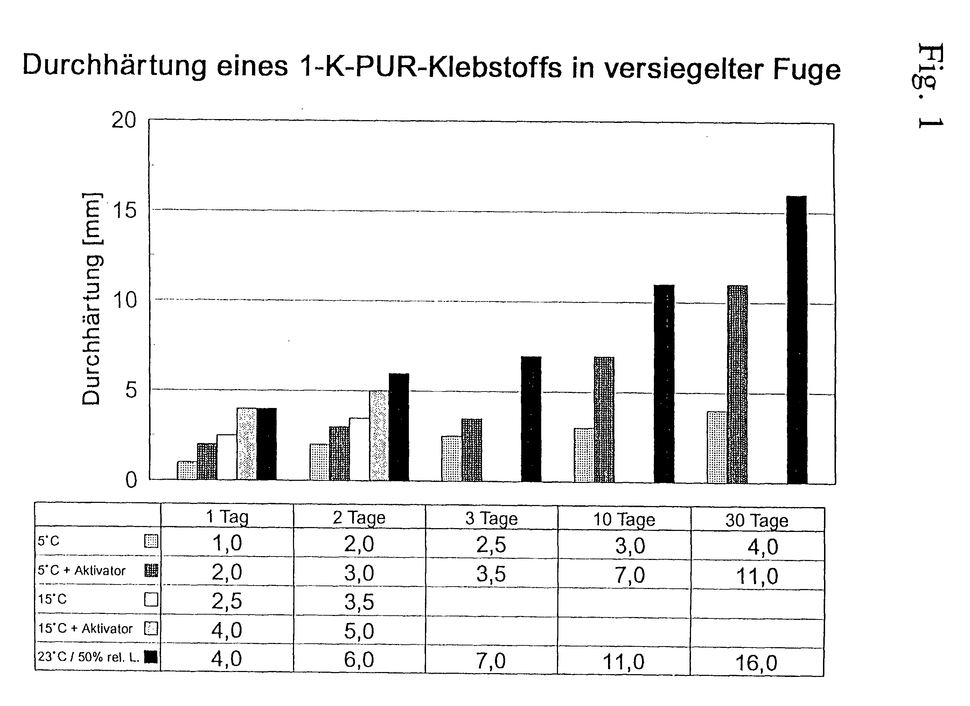

Fig. 1 zeigt ein Balkendiagramm der Durchhärtung in mm für einen 1-Komponentenkleb-stoff unter verschiedenen Bedingungen.

Erfindungsgemäß wird das Medium zum Beschleunigen der Vernetzung bei Verwendung des Kleb- oder Dichtstoffes, insbesondere nachträglich, d.h. nach dem Aufbringen des Klebstoffes, beispielsweise durch Aufsprühen, Übergießen, Aufstreichen etc., aufgebracht. Das Medium kann dem Klebstoff jedoch genauso während des Aufbringens, z.B. mittels einer 2-Komponentendüse, zugesetzt werden. Das nachträgliche Aufbringen auf den Klebstoff wird jedoch bevorzugt. Besonders geeignete Auftragsarten sind das Aufsprühen oder Aufstreichen.

Typische Beispiele für die erfindungsgemäß zu verwendenden feuchtigkeitsvernetzenden Kleb- oder Dichtstoffe sind Cyanoacrylate, Silikonkautschuke, Polyurethane sowie MS-Polymere, wobei Polyurethane besonders bevorzugt sind. Geeignete 1-Komponentenklebstoffe sind z.B. die von der Kömmerling Chemische Fabrik KG unter den Handelsnamen Körapur 125 und 140 sowie Körapop 211 und 225 erhältlichen Produkte.

Gemäß einer Ausführungsform wird ein Medium verwendet, welches das Vernetzen des Klebstoffes beschleunigen kann. Erfindungsgemäß enthält das Medium dazu einen die Vernetzung, d.h. die Polymerisation beschleunigenden Katalysator (Beschleuniger). Im Falle eines Polyurethan-Klebstoffes stellt dieser Beschleuniger ein wasserlösliches oder wasserdispergierbares Amin oder eine organische Metallverbindung dar.

Andererseits kann auch Wasser als Beschleuniger aufgetragen werden. Da jedoch bei Temperaturen weit oberhalb des Gefrierpunktes die Luftfeuchtigkeit ausreicht, um maximale Polymerisationsgeschwindigkeiten zu erreichen, hat das Aufbringen von Wasser nur an den nach dem Zusammenfügen für Luftfeuchtigkeit unzugänglichen Stellen Wirkung. Dagegen hat das Auftragen von Wasser bei Temperaturen knapp über dem Gefrierpunkt mit entsprechend verringerter Feuchtigkeit eine deutliche Steigerung der Polymerisationsgeschwindigkeit zur Folge. Wasser kann also als Beschleuniger fungieren, muß dieses aber nicht unter allen Bedingungen tun. Im Gegensatz zu Wasser beschleunigen Amine die Polyurethanvernetzung in jedem Fall.

Beispiele für die verwendeten Amine sind in der DE-A-31 45 991 genannt, wie z.B. tertiäre aliphatische oder aromatische Mono- und Polyamine. Bevorzugt sind Dimethylbenzylamin. 1,4-Diaza-2,2,2-(bicyclooctan) (nach anderer Nomenklatur Triethylendiamin (TEDA)) oder Tri-(dimethylaminomethyl)-phenol.

Andere Beschleuniger sind Bis(dimethylaminoethyl)-ether/Diproplyenglykol (70/30 %), Dimethylethanolamin (DMEA), TEDA/Ethylenglykol (33/67 %), TEDA/1,4-Butandiol (25/75 %), tertiäre Amine mit Hydroxylgruppen, tertiäre Amine und TEDA/Dipropylengly-kol (33/67 %), wie die unter den Handelsnamen Dabco BL-11, Dabco BLV, Dabco Crystal, Dabco DMEA, Dabco EG, Dabco S-25, Dabco T, Dabco TETN, Dabco WT, Dabco 33-LV, Polycat 9, Polycat 15, Polycat 12, Polycat 77 und Polycat 91 erhältlichen. Beson-ders bevorzugt ist Triethylendiamin (TEDA) allein oder in Kombination mit 1,2-Ethylendiol, Ethylenglykol, Dipropylenglykol oder 1,4-Butandiol.

Die genannten Amine werden in dem Medium in einer Konzentration von 1-40 Gew.-% eingesetzt. Bevorzugterweise werden sie in Konzentrationen von 5-30 Gew.-% und noch bevorzugter von 7-15 Gew.-% eingesetzt.

Die als Beschleuniger zu verwendende organische Metallverbindungen ist ausgewählt unter Dibutylzinndilaurat, Zinn-II-octoat oder dem Phenyl-Hg-ester.

Als Lösungsmittel für die verwendeten Beschleuniger können Wasser, mehrwertige Alkohole wie 1,2-Ethylendiol, inerte Kohlenwasserstoffe, wie Benzin, Hexan, Halogenkohlenwasserstoffe, wie Tetrachlorkohlenstoff, Chloroform, Methylenchlorid, Ether, wie Dioxan, Ethylether, sowie deren Gemische verwendet werden, mit der Maßgabe, daß das Lösungsmittel inert gegenüber dem Beschleuniger ist, diesen gut löst und die Vernetzung des Poly-urethans nicht nachteilig beeinflußt. Besonders bevorzugt wird Wasser als Lösungsmittel verwendet.

Gemäß einer weiteren Ausführungsform wird ein Medium verwendet, welches das Vernetzen des Klebstoffes unter Bedingungen ermöglicht, welche das Vernetzen an sich nicht gestatten oder zumindest in unerwünschter Weise behindern. Insbesondere ist das Verfahren dadurch gekennzeichnet, daß es bei Temperaturen <8°C, vorzugsweise <4°C, stärker bevorzugt <0°C durchgeführt wird. Das Medium stellt dann vorzugsweise eine bei diesen Temperaturen flüssige wäßrige Lösung dar, wozu der Gefrierpunkt dieser Lösung entsprechend erniedrigt wird.

Das Medium kann zur Erniedrigung seines Gefrierpunktes anorganische Salze, Amine, Glykole, Alkali- und Erdalkalisalze organischer Säuren, mehrwertige Alkohole, Polyole, Ether, Ketone und Halogenkohlenwasserstoffe sowie deren Gemische enthalten, mit der Maßgabe, daß diese Substanzen mit der Vernetzung des Klebstoffes nicht nachteilig interferieren.

Beispiele für anorganische Salze wären Alkali- und Erdalkalihalogenide, -phosphate, -sul-fate, -hydroxide und -oxide, für Glykole Glykol, Ethylenglykol, Propylenglykol sowie die entsprechenden Polyglykole. Geeignete, in Form ihrer Salze einsetzbare organische Säuren wären Essigsäure, Oxalsäure, Glyoxalsäure, Milchsäure, Weinsäure und Citronensäure. Für die einsetzbaren Alkohole und Polyole wären 1,2-Ethylendiol, Glycerin und Zuckeralkohole wie Sorbit zu nennen. Ebenfalls können Ether wie Diethylether, Dioxan, Ketone wie Aceton oder Methylethylketon oder Halogenkohlenwasserstoffe wie Mono- bis Tetrachlorkohlen-stoff, Dichlorethan, Trichlorethan, Dichlordifluorethan, Tetrafluorethan etc. eingesetzt werden.

Zur Erniedrigung des Gefrierpunktes können darüber hinaus auch Amine eingesetzt werden. Bevorzugterweise werden die auch als Beschleuniger fungierenden Amine eingesetzt. Die verwendeten Mengen entsprechend dabei den oben genannten Mengen. Wäßrige Medien, die sein solches Amin enthalten, erfüllen erfindungsgemäß eine Doppelfunktion, da sie das Vernetzen bei Temperaturen unter 0°C ermöglichen und zudem noch beschleunigen. Solche Medien sind dementsprechend besonders bevorzugt.

Bevorzugterweise wird ein Medium verwendet, welches eine wäßrige Lösung von 1-40 Gew.-% Amin darstellt. Dieses Medium in Form eines Wasser/Amin-Gemisches gestattet es in besonders vorteilhafter Weise, erstens den Anwendungsbereich von Polyurethan-Kleb- oder Dichtstoffen auf Arbeiten bei Temperaturen unter dem Gefrierpunkt auszudehnen und zweitens die aufgrund der tiefen Temperatur verlangsamte Reaktion des Isocyanates mit Wasser und der zweiten Komponente zu beschleunigen. Diese Vorteile werden erreicht, ohne daß gleichzeitig die Lagerstabilität und damit die Produktionsleistung des 1-Komponentenproduktes verringert wird.

Die Erfindung soll im folgenden anhand von Beispielen veranschaulicht werden.

### Beispiel I

Ein üblicher 1-Komponenten-PU-Klebstoff (Körapur 140) wurde zum Kleben einer versiegelten Fuge verwendet. Als Beschleuniger wurde eine wäßrige Lösung aus TEDA auf die Klebstoffraupe aufgetragen. Tabelle 1 gibt die Durchhärtung der Raupe gemessen bei 5, 15 bzw. 23°C nach 1, 2, 3, 10 und 30 Tagen an. Bei 5 und 15°C wurden jeweils Versuche mit und ohne Beschleuniger durchgeführt. Fig. 1 zeigt ein Balkendiagramm der erhaltenen Werte. Den Zeitstrahl bilden die in der Tabelle angegebenen Tage. Der Übersichtlichkeit halber ist die nachfolgende Tabelle deshalb in die Figur 1 nochmals aufgenommen.

| | 1 Tag | 2 Tage | 3 Tage | 10 Tage | 30 Tage |
|---|---|---|---|---|---|
| 5°C | 1,0 | 2,0 | 2,5 | 3,0 | 4,0 |
| 5°C + Aktivator | 2,0 | 3,0 | 3,5 | 7,0 | 11,0 |
| 15°C | 2,5 | 3,5 | | | |
| 15°C + Aktivator | 4,0 | 5,0 | | | |
| 23°C/50 % rel. L. | 4,0 | 6,0 | 7,0 | 11,0 | 16,0 |

Aus der Tabelle ist ersichtlich, daß sich mit Hilfe des erfindungsgemäßen Beschleunigers deutliche Steigerungen der Durchhärtung gerade bei tieferen Temperaturen erzielen lassen.

## Patentansprüche

1. Verfahren zur Vernetzung eines feuchtigkeitsvernetzenden Kleb- oder Dichtstoffes, welches bei Temperaturen unterhalb von 8°C ausgerührt wird und bei dem dem Kleb- oder Dichtstoff erst bei seiner Verwendung ein Medium zugesetzt wird bzw. ein Medium auf den Kleb- oder Dichtstoff aufgebracht wird, dadurch gekennzeichnet, daß der feuchtigkeitsvernetzende Kleb- oder Dichtstoff ein Cyanoacrylat, ein Silikonkautschuk, ein Polyurethan oder MS-Polymer darstellt und daß das Medium ein Amin oder eine organische Metallverbindung, ausgewählt unter Dibutylzinndilaurat, Zinn-II- octoat oder dem Phenyl-Hg-ester, enthält.

2. Verfahren nach Anspruch 1, dadurch gekennzeichnet, daß das Medium nachträglich zugesetzt bzw. aufgebracht wird.

3. Verfahren nach Anspruch 1 oder 2, dadurch gekennzeichnet, daß das Medium nach dem Auftragen des Kleb- oder Dichtstoffes mittels Aufsprühen, Übergießen oder Aufstreichen auf diesen aufgebracht wird.

4. Verfahren nach Anspruch 1, dadurch gekennzeichnet, daß das Medium eine bei Temperaturen unterhalb des Gefrierpunktes von Wasser, insbesondere unter 0°C, flüssige wäßrige Lösung mit einem entsprechend erniedrigtem Gefrierpunkt darstellt.

5. Verfahren nach Anspruch 4, dadurch gekennzeichnet, daß das Medium zur Erniedrigung seines Gefrierpunktes anorganische Salze, Amine, Glykole, Alkali- und Erdalkalimetallsalze organischer Säuren, mehrwertige Alkohole, Polyole, Ether, Ketone oder Halogenkohlenwasserstoffe sowie deren Gemische enthält, mit der Maßgabe, daß diese Substanzen mit der Vernetzung des Kleb- oder Dichtstoffes nicht nachteilig interferieren.

6. Verfahren nach Anspruch 5, dadurch gekennzeichnet, daß das Medium eine ein Amin enthaltende wäßrige Lösung darstellt.

7. Verfahren nach Anspruch 6, dadurch gekennzeichnet, daß das Amin Triethylendiamin gegebenenfalls in Kombination mit 1,2-Ethylendiol, Ethlyenglykol, Dipropylenglykol oder 1,4-Butandiol ist.

8. Verfahren nach Anspruch 7, dadurch gekennzeichnet, daß das Medium eine wäßrige Lösung mit einem Gehalt an Amin von 1 - 40 Gew.-%, vorzugsweise 5 - 30 Gew.-% darstellt.

9. Verwendung eines Mediums, enthaltend ein Amin oder eine organische Metallverbindung, zur Beschleunigung der Vernetzung eines feuchtigkeitsvernetzenden Kleb- oder Dichtstoffes ausgewählt unter einem Cyanoacrylat, einem Siliconkautschuk, einem Polyurethan oder einem LMS-Polymeren, wobei das Medium bei Temperaturen unterhalb von 8 °C dem Kleb- oder Dichtstoff zugesetzt wird bzw. auf den Kleb- oder Dichtstoff aufgebracht wird.

## Claims

1. Method for cross-linking a moisture-crosslinking adhesive or sealant that is performed at temperatures below 8°C and in which, but not until it is used, a medium is added to the adhesive or sealant and/or a medium is applied to the adhesive or sealant, characterized in that the moisture-crosslinking adhesive or sealant represents a cyanoacrylate, a silicone rubber, a polyurethane or an MS polymer and in that the medium contains an amine or an organic metal compound chosen from among dibutyl tin dilaurate, tin(II) octoate or phenyl Hg ester.

2. Method according to Claim 1, characterized in that the medium is added and/or applied at a later time.

3. Method according to Claim 1 or 2, characterized in that, after the application of the adhesive or sealant, the medium is applied to the latter by spraying onto, pouring over or painting onto the latter

4. Method according to Claim 1, characterized in that the medium represents an aqueous solution with a correspondingly lowered freezing point that is liquid at temperatures below the freezing point of water, in particular below 0°C.

5. Method according to Claim 4, characterized in that the medium contains inorganic salts, amines, glycols, alkali and alkaline earth salts of organic acids, polyvalent alcohols, polyols, ethers, ketones or halogenated hydrocarbons as well as mixtures thereof in order to lower its freezing point, subject to the condition that these substances do not interfere disadvantageously with the cross-linking of the adhesive or sealant.

6. Method according to Claim 5, characterized in that the medium represents an aqueous solution containing an amine.

7. Method according to Claim 6, characterized in that the amine is triethylenediamine optionally in combination with 1,2-ethylene diol, ethylene glycol, dipropylene glycol or 1,4-butandiol.

8. Method according to Claim 7, characterized in that the medium represents an aqueous solution with an amine content of 1 - 40 % wt./wt., preferably 5 - 30 % wt./wt.

9. Use of a medium containing an amine or an organic metal compound to accelerate the cross-linking of a moisture-crosslinking adhesive or sealant selected from among a cyanoacrylate, a silicone rubber, a polyurethane or an LMS polymer, whereby the medium is added to the adhesive or sealant and/or is applied to the adhesive or sealant at temperatures below 8°C.

## Revendications

1. Procédé de réticulation d'un matériau adhésif ou d'étanchéité réticulable sous l'effet de l'humidité, réalisé à une température inférieur à 8°C et dans lequel on ajoute un agent au matériau adhésif ou d'étanchéité, ou on applique un agent sur le matériau adhésif ou d'étanchéité seulement lors de l'utilisation de celui-ci, caractérisé par le fait que le matériau adhésif ou d'étanchéité réticulable sous l'effet de l'humidité est un cyanoacrylate, un caoutchouc silicone, un polyuréthanne ou un polymère MS, et que l'agent est une amine ou un composé organométallique choisi parmi le dilaurate de dibutylétain, le II-octoate d'étain ou le phénylester de Hg.

2. Procédé selon la revendication 1, caractérisé par le fait que l'agent est ajouté ou appliqué ultérieurement.

3. Procédé selon la revendication 1 ou 2, caractérisé par le fait qu'après application du matériau adhésif ou d'étanchéité, l'agent est appliqué sur celui-ci par pulvérisation, coulée ou enduction.

4. Procédé selon la revendication 1, caractérisé par le fait que l'agent est une solution aqueuse qui est liquide à une température inférieure au point de congélation de l'eau, en particulier inférieure à 0°C, et qui présente un point de congélation abaissé de façon appropriée.

5. Procédé selon la revendication 4, caractérisé par le fait que, pour abaisser le point de congélation de l'agent, celui-ci contient des sels inorganiques, des amines, des glycols, des sels de métaux alcalins ou alcalino-terreux d'acides organiques, des alcools à valences multiples, des polyols, des éthers, des cétones ou des hydrocarbures halogénés ainsi que des mélanges de ceux-ci, étant entendu que ces substances n'entravent pas la réticulation du matériau adhésif ou d'étanchéité.

6. Procédé selon la revendication 5, caractérisé par le fait que l'agent est une solution aqueuse contenant une amine.

7. Procédé selon la revendication 6, caractérisé par le fait que l'amine est la triéthylènediamine, éventuellement en combinaison avec le 1,2-éthylènediol, l'éthylèneglycol, le dipropylèneglycol ou le 1,4-butanediol.

8. Procédé selon la revendication 7, caractérisé par le fait que l'agent est une solution aqueuse ayant une teneur en amine de 1 à 40 % en poids, de préférence de 5 à 30 % en poids.

9. Utilisation d'un agent qui contient une amine ou un composé organométallique pour accélérer la réticulation d'un matériau adhésif ou d'étanchéité réticulable sous l'effet de l'humidité, choisi parmi un cyanoacrylate, un caoutchouc silicone, un polyuréthanne ou un polymère MS, l'agent étant ajouté au matériau adhésif ou d'étanchéité ou appliqué sur celui-ci à une température inférieure à 8°C.
